# EUROPEAN PATENT APPLICATION

(11) **EP 2 528 271 A1**
(43) Date of publication of application: **28.11.2012**
(21) Application number: 10842860.8
(22) Date of filing: 24.06.2010
(51) Int. Cl.: H04L 12/24

(54) **METHOD, PASSIVE OPTICAL NETWORK SYSTEM AND OPTICAL LINE TERMINAL FOR ENABLING DISTRIBUTED PROTECTION**

(30) Priority: 18.01.2010 CN 201010001845
(71) Applicant: ZTE Corporation, Shenzhen City, Guangdong Province 518057 (CN)
(72) Inventor: CHEN, Jieyun, Guangdong Province, 518057 (CN); LU, Jinshu, Guangdong Province, 518057 (CN); HUANG, Wenjie, Guangdong Province, 518057 (CN)
(74) Representative: Novagraaf Technologies
(86) International application number: PCT/CN2010/074402
(87) International publication number: WO 2011/085576

(57) **Abstract**

A method for implementing distributed protection comprises: if a line card of an optical line terminal detects damage of a main interface or interrupt of services carried on the main interface, performing protection switching to switch communication services carried on the main interface to a standby interface. A passive optical network system for implementing distributed protection comprises an optical line terminal comprising one or more line cards, wherein the line card of optical line terminal is configured to perform protection switching when detecting damage of a main interface or interrupt of services carried on the main interface so as to switch communication services carried on the main interface to a standby interface. The present invention further provides an optical line terminal for implementing distributed protection. Using the present invention, the single point invalidation problem caused by using only the main switching board for implementing the protection switching in the centralized protection can be avoided, and the PON protection switching service recovery time is decreased.

## Description

### Technical Field

The present invention relates to the field of communication technology, and in particular, to a method, passive optical network system and optical line terminal for implementing distributed protection in a Passive Optical Network (PON).

### Background Art

Passive optical networks include Ethernet PONs (EPONs), Gigabit PONs (GPONs), Next Generation PONs (NG-PONs), etc. The passive optical network, which uses a point-to-multipoint optical fiber access technology, is composed of Optical Line Terminals (OLTs) at the central office, Optical Network Units (ONUs) at the user side and an Optical Distribution Network (ODN) connecting the OLTs with the ONUs. The protection mechanism of the passive optical network is mainly used to enhance the reliability of an optical fiber access network, and the protection type mainly includes type B protection and type C protection.

In the type B protection, when an OLT working interface is damaged or a trunk optical fiber connection between the OLT interface and the ODN is interrupted, protection switching occurs voluntarily in the OLT to switch to an OLT standby interface by using the OLT standby interface and a standby trunk optical fiber between the OLT standby interface and the ODN, so as to reestablish an optical fiber path from the OLT standby interface to the ONU; while in the type C protection, when the OLT working interface and the ONU working interface are damaged or any optical fiber connection between the OLT working interface, the ODN and the ODN working interface is interrupted, protection switching occurs voluntarily in the OLT to switch to an OLT standby interface and an ONU standby interface by using the OLT standby interface, a standby trunk optical fiber between the OLT standby interface and the ODN, and an ONU standby interface, and a standby branch optical fiber between the ONU standby interface and the ODN, so as to reestablish an optical fiber path from the OLT standby interface to the ONU standby interface. When communication between the OLT and ONU is interrupted, the PON protection technology can be used to implement protection switching so as to recover communication services rapidly.

An OLT device generally comprises a main switching board and a plurality of line cards for carrying PON services. Message intercommunication is implemented between the main switching board and the line cards through an inter-board message mechanism. An OLT interface is located on a line card, and the OLT device is connected to an ONU device through the OLT interface on the line card. The current PON protection is implemented by a main switching board of the optical line terminal by collecting alarms, operating a protection algorithm, using an inter-board message for notification and causing the line card to perform protection operation, that is, by the traditional centralized PON protection mode, in which the line card firstly report an alarm of the OLT interface or ONU interface to the main switching board through the first inter-board message, and the main switching board operates the protection algorithm and obtains the specific protection switching method through the protection algorithm, and then the line card is informed of the specific embodiment of the protection switching by the second inter-board message, and finally the line card performs the protection switching operation. However, this method has defects. Firstly, in the centralized protection mode, since protection functions are all centrally implemented on the main switching board, and the OLT device generally has only one main switching board which is working, and if abnormality occurs in the only one main switching board, complete failure of all the PON protection functions will be resulted in. Secondly, the service interrupt time (protection switching service recovery time) caused by PON protection switching and required currently by operators is very short, and in the traditional centralized protection mode, the line card is required to report the alarm to the main switching board in the first inter-board message, therefore, scheduling time delay of the main switching board for the alarm message reported by the line card exists. With the increasingly expanded capacity of the optical line terminal device, the number of line cards in the device increases, and inter-board messages from different line cards received by the main switching board increase as well. Therefore, at the instant when protection switching occurs due to interruption of communication between the OLT working interface and the ONU interface, increase of the scheduling time of the main switching board for the alarm message reported by the line cards will cause increase of the protection switching service recovery time. Thus, inevitable time bottleneck exists in the centralized protection mode, and requirements of the operators for the PON protection switching service recovery time cannot be satisfied.

### Summary of the Invention

A technical problem to be solved by the present invention is to provide a method, passive optical network system and optical line terminal for implementing distributed protection so as to shorten recovery time of service protection and improve the service protecting capability of the optical line terminal.

In order to solve the above problem, the present invention provides a method for implementing distributed protection comprising: if a line card of an optical line terminal detects damage of a main interface or interrupt of services carried on the main interface, performing protection switching to switch communication services carried on the main interface to a standby interface.

In a type B protection mode, in the case that the main interface of the optical line terminal and the standby interface of the optical line terminal are protected complementarily and are located in the same line card,

the step of the line card of the optical line terminal detecting damage of the main interface or interrupt of the services carried on the main interface comprises: the line card detecting interrupt of trunk path communication between the main interface and an optical distribution network;

the step of performing the protection switching comprises: obtaining an activated interface as the standby interface and a non-activated interface as the main interface through a protection algorithm, closing the non-activated interface, opening the activated interface, and switching the communication services carried on the main interface to the standby interface.

In the type B protection mode, in the case that the main interface of the optical line terminal and the standby interface of the optical line terminal are protected complementarily and are located in different line cards,

the step of the line card of the optical line terminal detecting damage of the main interface or interrupt of the services carried on the main interface comprises: the line card where the main interface is located detecting interrupt of the trunk path communication between the main interface and the optical distribution network;

the step of performing the protection switching comprises: obtaining an activated interface as the standby interface and a non-activated interface as the main interface through the protection algorithm, closing the non-activated interface, sending a protection switching message to a line card where the activated interface is located, opening the standby interface after a line card where the standby interface is located receives the protection switching message, and switching the communication services carried on the main interface to the standby interface.

In a type C protection mode, in the case that a main interface and a standby interface of an optical network unit are protected complementarily and an first interface of the optical line terminal connected to the main interface of the optical network unit and an second interface of the optical line terminal connected to the standby interface of the optical network unit are located in the same line card,

the step of the line card of the optical line terminal detecting damage of the main interface or interrupt of the services carried on the main interface comprises: the line card detecting interrupt of communication between the first interface of the optical line terminal and the main interface of the optical network unit;

the step of performing the protection switching comprises: obtaining an activated interface as the standby interface and a non-activated interface as the main interface through the protection algorithm, sending a protection switching message to the optical network unit through the second interface connected to the activated interface, performing voluntarily the protection switching after the optical network unit receives the protection switching message and switching the communication services carried on the main interface to the standby interface.

In a type C protection mode, in the case that a main interface and a standby interface of an optical network unit are protected complementarily, and a first interface of the optical line terminal connected to the main interface of the optical network unit and a second interface of the optical line terminal connected to the standby interface of the optical network unit are located in different line cards,

the step of the line card of the optical line terminal detecting damage of the main interface or interrupt of the services carried on the main interface comprises: the line card where the first interface is located detecting interrupt of communication between the first interface of the optical line terminal and the main interface of the optical network unit;

the step of performing the protection switching comprises: obtaining an activated interface as the standby interface and a non-activated interface as the main interface through the protection algorithm, sending a protection switching message required to be sent to the optical network unit to a line card where the second interface connected to the activated interface is located, sending the protection switching message to the optical network unit after the line card where the second interface is located receives the protection switching message, performing voluntarily the protection switching after the optical network unit receives the protection switching message and switching the communication services carried on the main interface to the standby interface.

In order to solve the above technical problem, the present invention further provides a passive optical network system for implementing distributed protection comprising an optical line terminal comprising one or more line cards, wherein

the line card of optical line terminal is configured to perform protection switching when detecting damage of a main interface or interrupt of services carried on the main interface so as to switch communication services carried on the main interface to a standby interface.

In a type B protection mode, in the case that the main interface of the optical line terminal and the standby interface of the optical line terminal are protected complementarily and are located in the same line card,

the line card is configured to detect damage of the main interface or interrupt of the services carried on the main interface by detecting interrupt of trunk path communication between the main interface and an optical distribution network;

the line card is configured to perform the protection switching by obtaining an activated interface as the standby interface and a non-activated interface as the main interface through a protection algorithm, closing the non-activated interface, opening the activated interface, and switching the communication services carried on the main interface to the standby interface.

In the type B protection mode, in the case that the main interface of the optical line terminal and the standby interface of the optical line terminal are protected complementarily and are located in different line cards, the lines cards of the optical line terminal comprise a line card where the main interface is located and a line card where the standby interface is located, wherein

the line card where the main interface is located is configured to detect damage of the main interface or interrupt of the services carried on the main interface by detecting interrupt of the trunk path communication between the main interface and the optical distribution network;

the line card where the main interface is located is configured to perform the protection switching by obtaining an activated interface as the standby interface and a non-activated interface as the main interface through the protection algorithm, closing the non-activated interface, and sending a protection switching message to a line card where the activated interface is located;

the line card where the standby interface is located is configured to perform the protection switching by opening the standby interface after receiving the protection switching message, and switching the communication services carried on the main interface to the standby interface.

The system further comprises an optical network unit; in a type C protection mode, in the case that a main interface and a standby interface of the optical network unit are protected complementarily and an first interface of the optical line terminal connected to the main interface of the optical network unit and an second interface of the optical line terminal connected to the standby interface of the optical network unit are located in the same line card, the lines cards of the optical line terminal comprise a line card where the first interface is located and a line card where the second interface is located;

the line card where the first interface is located is configured to detect damage of the main interface or interrupt of the services carried on the main interface by detecting interrupt of communication between the first interface of the optical line terminal and the main interface of the optical network unit;

the line card where the first interface is located and the line card where the second interface is located are configured to perform the protection switching by obtaining an activated interface as the standby interface and a non-activated interface as the main interface through the protection algorithm, and sending a protection switching message to the optical network unit through the second interface connected to the activated interface;

the optical network unit is configured to perform voluntarily the protection switching after receiving the protection switching message and switch the communication services carried on the main interface to the standby interface.

The system further comprises an optical network unit; in a type C protection mode, in the case that a main interface and a standby interface of the optical network unit are protected complementarily, and an first interface of the optical line terminal connected to the main interface of the optical network unit and an second interface of the optical line terminal connected to the standby interface of the optical network unit are located in different line cards, the lines cards of the optical line terminal comprise a line card where the first interface is located and a line card where the second interface is located;

the line card where the first interface is located is configured to detect damage of the main interface or interrupt of the services carried on the main interface by detecting interrupt of communication between the first interface of the optical line terminal and the main interface of the optical network unit;

the line card where the first interface is located is configured to perform the protection switching by obtaining an activated interface as the standby interface and a non-activated interface as the main interface through the protection algorithm, and sending a protection switching message required to be sent to the optical network unit to a line card where the second interface connected to the activated interface is located;

the line card where the second interface is located is configured to perform the protection switching by sending the protection switching message received from the line card where the first interface is located to the optical network unit through the second interface;

the optical network unit is configured to perform voluntarily the protection switching after receiving the protection switching message and switch the communication services carried on the main interface to the standby interface.

In order to solve the above problem, the present invention further provides an optical line terminal for implementing distributed protection comprising one or more line cards, wherein

the line card is configured to perform protection switching when detecting damage of a main interface or interrupt of services carried on the main interface so as to switch communication services carried on the main interface to a standby interface.

In a type B protection mode, in the case that the main interface of the optical line terminal and the standby interface of the optical line terminal are protected complementarily and are located in the same line card,

the line card is configured to detect damage of the main interface or interrupt of the services carried on the main interface by detecting interrupt of trunk path communication between the main interface and an optical distribution network;

the line card is configured to perform the protection switching by obtaining an activated interface as the standby interface and a non-activated interface as the main interface through a protection algorithm, closing the non-activated interface, opening the activated interface, and switching the communication services carried on the main interface to the standby interface.

In the type B protection mode, in the case that the main interface of the optical line terminal and the standby interface of the optical line terminal are protected complementarily and are located in different line cards, the lines cards of the optical line terminal comprise a line card where the main interface is located and a line card where the standby interface is located, wherein

the line card where the main interface is located is configured to detect damage of the main interface or interrupt of the services carried on the main interface by detecting interrupt of the trunk path communication between the main interface and the optical distribution network;

the line card where the main interface is located is configured to perform the protection switching by obtaining an activated interface as the standby interface and a non-activated interface as the main interface through the protection algorithm, closing the non-activated interface, and sending a protection switching message to a line card where the activated interface is located;

the line card where the standby interface is located is configured to perform the protection switching by opening the standby interface after receiving the protection switching message, and switching the communication services carried on the main interface to the standby interface.

In a type C protection mode, in the case that a main interface and a standby interface of an optical network unit are protected complementarily and an first interface of the optical line terminal connected to the main interface of the optical network unit and an second interface of the optical line terminal connected to the standby interface of the optical network unit are located in the same line card, the lines cards of the optical line terminal comprise a line card where the first interface is located and a line card where the second interface is located;

the line card where the first interface is located is configured to detect damage of the main interface or interrupt of the services carried on the main interface by detecting interrupt of communication between the first interface of the optical line terminal and the main interface of the optical network unit;

the line card where the first interface is located and the line card where the second interface is located are configured to perform the protection switching by obtaining an activated interface as the standby interface and a non-activated interface as the main interface through the protection algorithm, and sending a protection switching message to the optical network unit through the second interface connected to the activated interface;

thus, the optical network unit performs voluntarily the protection switching after receiving the protection switching message and switches the communication services carried on the main interface to the standby interface.

In a type C protection mode, in the case that a main interface and a standby interface of an optical network unit are protected complementarily, and an first interface of the optical line terminal connected to the main interface of the optical network unit and an second interface of the optical line terminal connected to the standby interface of the optical network unit are located in different line cards, the lines cards of the optical line terminal comprise a line card where the first interface is located and a line card where the second interface is located;

the line card where the first interface is located is configured to detect damage of the main interface or interrupt of the services carried on the main interface by detecting interrupt of communication between the first interface of the optical line terminal and the main interface of the optical network unit;

the line card where the first interface is located is configured to perform the protection switching by obtaining an activated interface as the standby interface and a non-activated interface as the main interface through the protection algorithm, and sending a protection switching message required to be sent to the optical network unit to the line card where the second interface connected to the activated interface is located;

the line card where the second interface is located is configured to perform the protection switching by sending the protection switching message received from the line card where the first interface is located to the optical network unit through the second interface;

thus, the optical network unit performs voluntarily the protection switching after receiving the protection switching message and switches the communication services carried on the main interface to the standby interface.

The centralized protection has disadvantages in that PON protection functions of the OLT device are mainly implemented by the main switching board. However, in the distributed protection mode in accordance with the present invention, the ON protection functions are moved from the main switching board to the line card, which detects the alarm, operates the protection algorithm and carries out the protection switching operation, soa s to solve the single point failure problem, which is caused by implementing the PON protection using only the main switching board in the centralized protection mode. In the distributed protection in accordance with the present invention, the PON protection function can operate normally even if faults occur in the main switching board, and meanwhile, since the protection functions in the distributed protection are implemented by the line card, i.e., the line card is not required to report the detected alarm to the main switching board, there is no inter-board communication between the line card and the main switching board, and hence there is no scheduling delay of the main switching board for the alarm message of the line card, thereby eliminating the protection switching time bottleneck existing in the centralized protection mode, shortening recovery time of service protection and improving the service protection capability of the optical line terminal to meet the requirements of the operators.

### Brief Description of Drawings

FIG. 1 is a flowchart of a method for implementing distributed protection according to an embodiment;
FIG. 2 is a flowchart of a process where an optical line terminal device implements distributed protection in type B protection group;
FIG. 3 is a flowchart of a process where an optical line terminal device implements distributed protection in type C protection group;
FIG. 4 illustrates connections between an OLT device and ONU devices in type B protection according to specific example one; and
FIG. 5 illustrates connections between an OLT device and ONU devices in type C protection according to specific example two.

### Preferred Embodiments of the Invention

In the present invention, a passive optical network system for implementing distributed protection comprises an optical line terminal comprising one or more line cards, and an optical network unit.

The optical line terminal is configured to perform protection switching when detecting damage of a main interface or interrupt of services carried on the main interface so as to switch communication services carried on the main interface to a standby interface.

In a type B protection mode, in the case that the main interface of the optical line terminal and the standby interface of the optical line terminal are protected complementarily and are located in the same line card, the line card is configured to, after detecting interrupt of trunk path communication between the main interface and an optical distribution network, obtain an activated interface as the standby interface and a non-activated interface as the main interface through a protection algorithm, close the non-activated interface, i.e., the main interface, open the activated interface, i.e., the standby interface, and switch the communication services carried on the main interface of the optical line terminal to the standby interface of the optical line terminal.

In the type B protection mode, in the case that the main interface of the optical line terminal and the standby interface of the optical line terminal are protected complementarily and are located in different line cards, the line card where the main interface is located is configured to, after detecting interrupt of the trunk path communication between the main interface and the optical distribution network, obtain an activated interface as the standby interface and a non-activated interface as the main interface through the protection algorithm, close the non-activated interface, i.e., the main interface, and send a protection switching message to a line card where the activated interface is located. The line card where the standby interface is located is configured to open the standby interface after receiving the protection switching message, and switch the communication services carried on the main interface to the standby interface.

In a type C protection mode, in the case that a main interface and a standby interface of an optical network unit are protected complementarily and an first interface of the optical line terminal connected to the main interface of the optical network unit and an second interface of the optical line terminal connected to the standby interface of the optical network unit are located in the same line card, lines cards where the first interface and the second interface are located are configured to, after detecting interrupt of communication between the first interface of the optical line terminal and the main interface of the optical network unit, obtain an activated interface as the standby interface and a non-activated interface as the main interface through the protection algorithm, and send a protection switching message to the optical network unit through the second interface connected to the activated interface, i.e., the standby interface.

The optical network unit is configured to switch the communication services carried on the main interface to the standby interface after receiving the protection switching message of the optical line terminal.

In a type C protection mode, in the case that the main interface and the standby interface of the optical network unit are protected complementarily, and the first interface of the optical line terminal connected to the main interface of the optical network unit and the second interface of the optical line terminal connected to the standby interface of the optical network unit are located in different line cards, the line card where the first interface is located is configured to, after detecting interrupt of communication between the first interface of the optical line terminal and the main interface of the optical network unit, obtain an activated interface as the standby interface and a non-activated interface as the main interface through the protection algorithm, and send a protection switching message required to be sent to the optical network unit to the line card where the second interface connected to the activated interface, i.e., the standby interface, is located. The line card where the second interface is located is configured to send the protection switching message received from the line card where the first interface is located to the optical network unit through the second interface.

The optical network unit is configured to switch the communication services carried on the main interface to the standby interface after receiving the protection switching message.

The embodiment further provides an optical line terminal for implementing distributed protection comprising one or more line cards.

The line card is configured to detect damage of a main interface or interrupt of services carried on the main interface so as to switch communication services carried on the main interface to a standby interface.

In a type B protection mode, in the case that the main interface of the optical line terminal and the standby interface of the optical line terminal are protected complementarily and are located in the same line card,

the line card is configured to detect damage of the main interface or interrupt of the services carried on the main interface by detecting interrupt of trunk path communication between the main interface and an optical distribution network;

the line card is configured to perform the protection switching by obtaining an activated interface as the standby interface and a non-activated interface as the main interface through a protection algorithm, closing the non-activated interface, opening the activated interface, and switching the communication services carried on the main interface to the standby interface.

In the type B protection mode, in the case that the main interface of the optical line terminal and the standby interface of the optical line terminal are protected complementarily and are located in different line cards, the lines cards of the optical line terminal comprise a line card where the first interface is located and a line card where the second interface is located.

The line card where the main interface is located is configured to detect damage of the main interface or interrupt of the services carried on the main interface by detecting interrupt of the trunk path communication between the main interface and the optical distribution network.

The line card where the main interface is located is configured to perform the protection switching by obtaining an activated interface as the standby interface and a non-activated interface as the main interface through the protection algorithm, closing the non-activated interface, and sending a protection switching message to the line card where the activated interface is located.

The line card where the standby interface is located is configured to perform the protection switching by opening the standby interface after receiving the protection switching message, and switching the communication services carried on the main interface to the standby interface.

In a type C protection mode, in the case that a main interface and a standby interface of an optical network unit are protected complementarily and an first interface of the optical line terminal connected to the main interface of the optical network unit and an second interface of the optical line terminal connected to the standby interface of the optical network unit are located in the same line card, the lines cards of the optical line terminal comprise a line card where the first interface is located and a line card where the second interface is located.

The line card where the first interface is located is configured to detect damage of the main interface or interrupt of the services carried on the main interface by detecting interrupt of communication between the first interface of the optical line terminal and the main interface of the optical network unit.

The line card where the first interface is located and the line card where the second interface is located are configured to perform the protection switching by obtaining an activated interface as the standby interface and a non-activated interface as the main interface through the protection algorithm, and sending a protection switching message to the optical network unit through the second interface connected to the activated interface.

Thus, the optical network unit performs voluntarily the protection switching after receiving the protection switching message and switches the communication services carried on the main interface to the standby interface.

In the type C protection mode, in the case that a main interface and a standby interface of an optical network unit are protected complementarily, and an first interface of the optical line terminal connected to the main interface of the optical network unit and an second interface of the optical line terminal connected to the standby interface of the optical network unit are located in different line cards, the lines cards of the optical line terminal comprise a line card where the first interface is located and a line card where the second interface is located.

The line card where the first interface is located is configured to detect damage of the main interface or interrupt of the services carried on the main interface by detecting interrupt of communication between the first interface of the optical line terminal and the main interface of the optical network unit.

The line card where the first interface is located is configured to perform the protection switching by obtaining an activated interface as the standby interface and a non-activated interface as the main interface through the protection algorithm, and sending a protection switching message required to be sent to the optical network unit to the line card where the second interface connected to the activated interface is located.

The line card where the second interface is located is configured to perform the protection switching by sending the protection switching message received from the line card where the first interface is located to the optical network unit through the second interface.

Thus, the optical network unit performs voluntarily the protection switching after receiving the protection switching message and switches the communication services carried on the main interface to the standby interface.

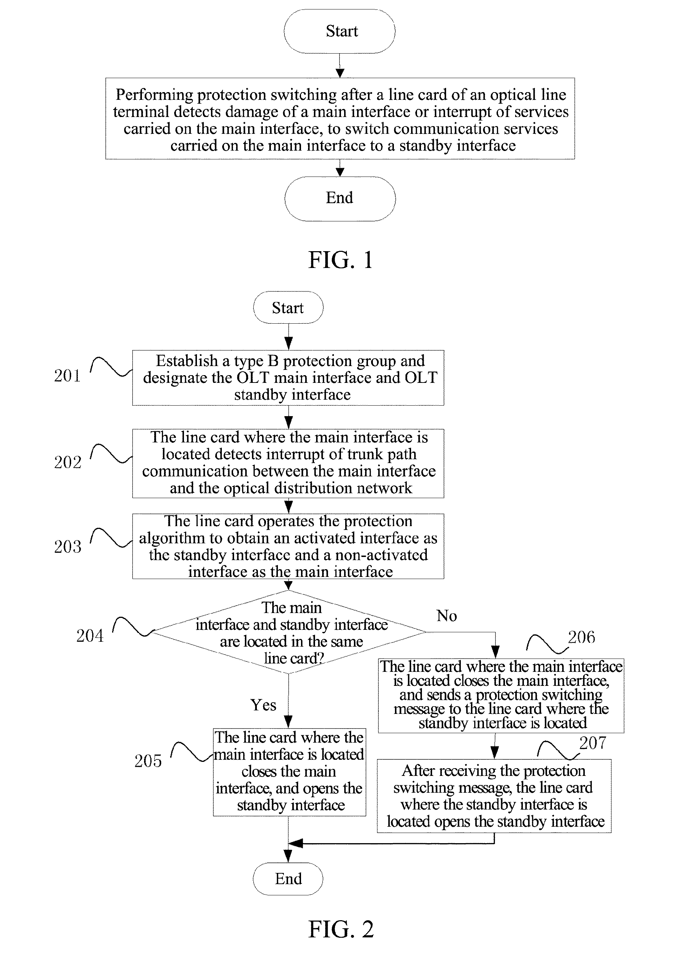

As shown in FIG. 1, a method for implementing distributed protection comprises: if a line card of an optical line terminal detects damage of a main interface or interrupt of services carried on the main interface, performing protection switching to switch communication services carried on the main interface to a standby interface.

There are different protection types, including type B protection and type C protection, in the optical line terminal device. The type B protection refers to protection for OLT interface redundancy, and switching is performed using OLT interfaces as granularity. The present invention is not limited to the method of connecting ONUs with OLT interfaces through N:2 light splitters, and the method of connecting the ONUs with the OLT interfaces by cascading 2:1 light splitters to 1:N light splitters may also be used. However, the final result should be that a plurality of ONUs being connected to two OLT interfaces through a single light splitter or by cascading of a plurality of light splitters can only be regarded as the plurality of ONUs being connected to the two PON interfaces of the same OLT device through the light splitters. The type C protection refers to protection for the OLT interfaces and ONU interface redundancy, and switching is performed using ONU interfaces as granularity.

As shown in FIG. 2, a method for implementing distributed protection in the type B protection mode comprises the following steps.

In step 201, a type B protection group is established, for example, two OLT interfaces are added to the protection group, one being a main interface and the other being a standby interface. The main interface and the standby interface are protected complementarily and are connected to ONUs via an ODN, services are carried on the main interface, and the standby interface is in a cold backup state. If the OLT interfaces that are protected complementarily are located in the same line card, the protection is same-board type B protection, and if they are located in different line cards, the protection is cross-board type B protection.

In step 202, the line card where the main interface is located detects interrupt of the trunk path communication between the main interface and the optical distribution network. Specifically, when the communication in the trunk path connected to the main interface is interrupted, the line card detects an alarm.

In step 203, the line card obtains an activated interface as the standby interface and a non-activated interface as the main interface through a protection algorithm.

In step 204, the line card determines whether the main interface and the standby interface are located in the same line card, and if yes, step 205 is executed; otherwise step 206 is executed.

In step 205, the line card where the main interface is located closes the non-activated interface, i.e., the main interface, opens the activated interface, i.e., the standby interface, and switches the communication services carried on the main interface of the optical line terminal to the standby interface of the optical terminal to complete the type B protection, and the process ends.

In step 206, the line card where the main interface is located closes the non-activated interface, i.e., the main interface, and sends an inter-board message, i.e., a protection switching message, to a line card where the activated interface, i.e., the standby interface, is located through an inter-board communication mechanism between the line cards, to notify the line card of the standby interface to perform operation on the standby interface.

In step 207, after receiving the protection switching message, the line card where the standby interface is located opens the standby interface, and switches the services carried on the main interface to the standby interface to complete the type B protection switching.

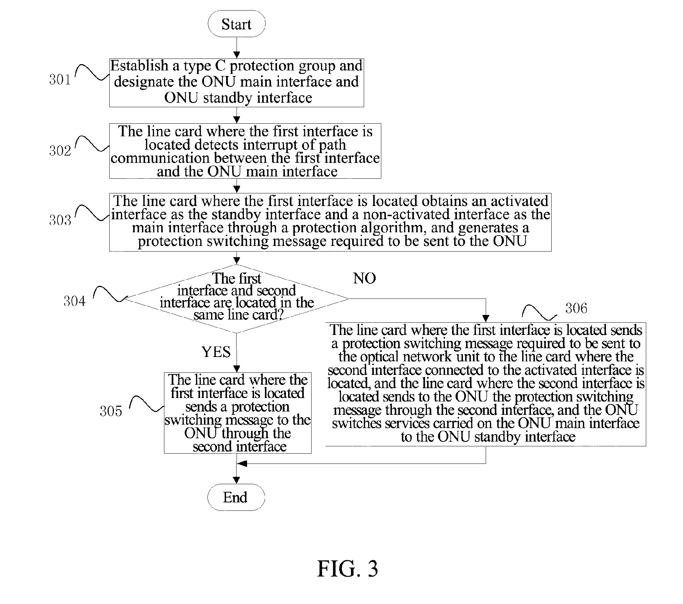

As shown in FIG. 3, a method for implementing distributed protection in the type C protection mode comprises the following steps.

In step 301, a type C protection group is established, for example, two ONU interfaces are added to the protection group, one being a main interface and the other being a standby interface. The two ONU interfaces that are protected complementarily and are connected to two OLT interfaces (referred to as the first interface and the second interface) respectively through different ODNs, services are carried on the main interface, and the standby interface is in a hot backup state. If the OLT interfaces that are protected complementarily are located in the same line card, the protection is same-board type C protection, and if they are located in different line cards, the protection is cross-board type C protection.

In step 302, the line card where the OLT interface (i.e., the first interface) connected to the main interface of the ONU is located detects interrupt of path communication between the first interface and the ONU main interface. Specifically, when the path communication between the first interface and the main interface of the ONU is interrupted, the line card where the OLT interface connected to the main interface of the ONU, i.e., the first interface, is located detects an alarm.

In step 303, the line card where the first interface is located obtains an activated interface as the standby interface and a non-activated interface as the main interface through a protection algorithm, and generates a protection switching message required to be sent to the ONU, where this protection switching message is specifically K1/K2 protocol bytes (K1/K2 protocol is a protocol by which the OLT communicates with the ONU, and K1 bytes are a combination of the protection switching request type and protection switching request channel number, and K2 bytes are a combination of protection request channel number, protection architecture mode and protection switching mode).

In step 304, it is determined whether the first interface connected to the main interface and the second interface connected to the standby interface are located in the same line card, and if yes, step 305 is executed; otherwise step 306 is executed.

In step 305, the line card where the first interface is located sends a protection switching message to the ONU through the second interface connected to the activated interface, i.e., the standby interface; the ONU switches the services carried on the main interface of the ONU to the standby interface of the ONU after receiving the protection switching message to complete the type C protection switching.

In step 306, the line card where the first interface is located sends a protection switching message, which is required to be sent to the optical network unit, to the line card where the second interface connected to the activated interface, i.e., the standby interface, is located, through an inter-board communication mechanism between line cards, and the line card where the second interface is located sends the protection switching message received from the line card where the first interface is located to the ONU through the second interface, and the ONU switches the services carried on the main interface of the ONU to the standby interface of the ONU after receiving the protection switching message to complete the type C protection switching.

The specific embodiments of the present invention will be described below in conjunction with the accompanying drawings.

### Specific example one:

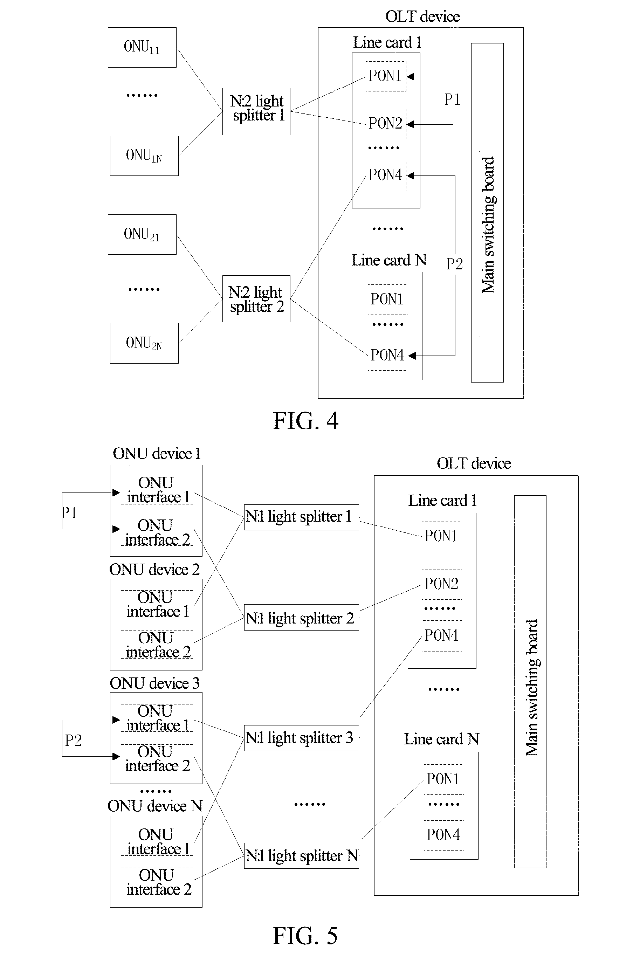

In the type B protection mode, network connections between an OLT device and ONU devices are as shown in FIG. 4, where the OLT device includes a main switching board and multiple line cards, where an OLT interface PON1 and an OLT interface PON2 of a line card 1 are connected to ONU₁₁ to ONU_{1N}through a N:2 light splitter 1, an OLT interface PON4 of the line card 1 and an OLT interface PON4 of a line card N are connected to ONU₂₁ to ONU_{2N} through a N:2 light splitter 2. The distributed protection of the type B protection group is implemented through the following steps.

In step 1, a type B protection group P1 is established, the OLT interface PON1 of the line card 1 is configured as a main interface, and the OLT interface PON2 of the line card 1 is configured as a standby interface (at which point, the main interface is opened and the standby interface is closed). The communication services carried on the main interface are normal, and the standby interface is in a cold backup state. Since the main interface and the standby interface are located in the same line card, this protection mode is same-board type B protection.

In step 2, when a physical path between the main interface of the line card 1 and the light splitter 1 is interrupted (so are the services), the line card 1 immediately detects an alarm, and operates the protection algorithm to calculate the activated interface after the protection switching as the standby interface and the non-activated interface as the main interface.

In step 3, line card 1 firstly closes the non-activated interface (i.e., the main interface), and then opens the activated interface (i.e., the standby interface), whereupon the services interrupted on the main interface are immediately recovered on the standby interface, and the same-board type B distributed protection is implemented through step 1 to step 3.

In step 4, a type B protection group P2 is established, the OLT interface 4 of the line card 1 is configured as the main interface, the OLT interface 4 of a line card N is configured as the standby interface (at which point, the main interface is opened and the standby interface is closed). The communication services carried on the main interface are normal, and the standby interface is in a cold standby state. Since the main interface and the standby interface are located in different line cards, this protection mode is cross-board type B protection.

In step 5, when the physical path between the main interface of the line card 1 and the light splitter 2 is interrupted (so are the services), the line card 1 immediately detects an alarm, and operates the protection algorithm to calculate the activated interface after the PON protection switching as the standby interface and the non-activated interface as the main interface.

In step 6, the line card 1 firstly closes its non-activated interface (i.e., the main interface), and then sends an inter-board message to the line card N to notify the line card N to open its activated interface (i.e., the standby interface), the line card N opens the standby interface after receiving the message, whereupon the services interrupted on the main interface are immediately recovered on the standby interface, and the cross-board type B distributed protection is implemented through step 4 to step 6.

### Specific example two:

In the type C protection mode, network connections between an OLT device and ONU devices are as shown in FIG. 5, where the OLT device includes a main switching board and multiple line cards, where an OLT interface PON1 of a line card 1 is connected to an ONU interface 1 of an ONU device 1 through a N:1 light splitter 1, an OLT interface PON2 of the line card 1 is connected to an ONU interface PON2 of the ONU device 1 through a N:1 light splitter 2, an OLT interface PON4 of the line card 1 is connected to an ONU interface 1 of the ONU device 3 through a N:1 light splitter 3, and an OLT interface PON1 of the line card N is connected to an ONU interface 2 of an ONU device 3 through a N:1 light splitter 4. The distributed protection of the type C protection group is implemented through the following steps.

In step 1, a type B protection group P1 is established, the ONU interface 1 of the ONU device 1 is configured as a main interface, and the ONU interface 2 is configured as a standby interface. The communication services carried on the main interface are normal, and the standby interface is in a cold backup state. Since the OLT interfaces connected to the main interface and the standby interface are located in the same line card, this protection mode is same-board type C protection.

In step 2, when a physical path between the main interface and the light splitter 1 is interrupted (so are the services), the line card 1 connected to the main interface immediately detects an alarm, and operates the protection algorithm to calculate the activated interface as the standby interface and the non-activated interface as the main interface, and meanwhile calculates K1/K2 protocol bytes to be transmitted to the ONU device 1.

In step 3, since the protection group P1 is same-board type C protection, the line card 1 may send the K1/K2 protocol bytes to the activated interface, i.e., the standby interface, calculated in step 2 through the OLT interface PON2 of the line card 1 to notify the ONU device 1 to perform protection switching. The ONU device 1 can perform the protection switching at the ONU side after switching the received K1/K2 protocol bytes, whereupon the services interrupted on the main interface are immediately recovered on the standby interface. The same-board type C distributed protection of protection group P1 is implemented through step 1 to step 3.

In step 4, a type C protection group P2 is established, the ONU interface 1 of the ONU device 3 is configured as the main interface, the ONU interface 2 is configured as the standby interface. The communication services carried on the main interface are normal, and the standby interface is in a hot standby state. Since the main interface and the standby interface are located in different line cards, this protection mode is cross-board type C protection.

In step 5, when the physical path between the main interface and the light splitter 3 is interrupted (so are the services), the line card 1 connected to the main interface immediately detects an alarm, and operates the protection algorithm to calculate the activated interface after the protection switching as the standby interface and the non-activated interface as the main interface, and meanwhile calculates K1/K2 protocol bytes to be transmitted to the ONU device 3.

In step 6, since the OLT interface connected to the activated interface, i.e., the standby interface, calculated in step 5, is located in the line card N, the line card 1 sends the K1/K2 protocol bytes to the line card N through an inter-board message. The line card N sends the protocol bytes to the ONU device 3 through the OLT interface 1 after receiving the message. The ONU device 3 performs the protection switching at the ONU side after receiving the K1/K2 protocol bytes, whereupon the services interrupted on the main interface are immediately recovered on the standby interface. The cross-board type C distributed protection of protection group P1 is implemented through step 4 to step 6.

In conclusion, distributed protection methods of type B and type C protection groups are implemented respectively according to the embodiments of the present invention, i.e., the line cards of the optical line terminal are used to obtain a alarm for interruption of communication in an optical line, operate the protection algorithm and implement protection operation, that is, the PON protection functions are implemented on the line cards for carrying various services of the optical line terminal device, instead of implementing all protection functions on a single main switching board as in the centralized protection policy. Through the distributed protection method, the single point invalidation problem caused by using only the main switching board for implementing the protection switching in the centralized protection can be avoided, and meanwhile, since the line card is not required to transmit the alarm message to the main switching board in the distributed protection, i.e., there is no scheduling delay of the main switching board for the alarm message of the line card, thereby shortening the PON protection switching service recovery time.

It may be understood by those skilled in the art that all or some of the steps in the described method can be implemented by related hardware instructed by programs which may be stored in computer readable storage mediums, such as read-only memory, disk or CD-ROM, etc. Alternatively, all or some of the steps in the embodiments described above may also be implemented using one or more integrated circuits. Accordingly, each module/unit in the embodiments described above may be implemented in a form of hardware, or software functional module. The present invention is not limited to combinations of hardware and software in any particular form.

The above description is only the preferred embodiments of the present invention and is not intended to limit the present invention. Various modifications and variations to the present invention may be made by those skilled in the art. Any modification, equivalent substitution and variation made within the spirit and principle of the present invention should be covered in the protection scope of the present invention.

### Industrial Applicability

Through the distributed protection method, the single point invalidation problem caused by using only the main switching board for implementing the protection switching in the centralized protection can be avoided, and meanwhile, since the line card is not required to transmit the alarm message to the main switching board in the distributed protection, i.e., there is no scheduling delay of the main switching board for the alarm message of the line card, thereby shortening the PON protection switching service recovery time.

## Claims

1. A method for implementing distributed protection comprising:
if a line card of an optical line terminal detects damage of a main interface or interrupt of services carried on the main interface, performing protection switching to switch communication services carried on the main interface to a standby interface.

2. The method according to claim 1, wherein
in a type B protection mode, in the case that the main interface of the optical line terminal and the standby interface of the optical line terminal are protected complementarily and are located in the same line card,
the step of the line card of the optical line terminal detecting damage of the main interface or interrupt of the services carried on the main interface comprises: the line card detecting interrupt of trunk path communication between the main interface and an optical distribution network;
the step of performing the protection switching comprises: obtaining an activated interface as the standby interface and a non-activated interface as the main interface through a protection algorithm, closing the non-activated interface, opening the activated interface, and switching the communication services carried on the main interface to the standby interface.

3. The method according to claim 1, wherein
in a type B protection mode, in the case that the main interface of the optical line terminal and the standby interface of the optical line terminal are protected complementarily and are located in different line cards,
the step of the line card of the optical line terminal detecting damage of the main interface or interrupt of the services carried on the main interface comprises: the line card where the main interface is located detecting interrupt of trunk path communication between the main interface and an optical distribution network;
the step of performing the protection switching comprises: obtaining an activated interface as the standby interface and a non-activated interface as the main interface through a protection algorithm, closing the non-activated interface, sending a protection switching message to a line card where the activated interface is located, opening the standby interface after a line card where the standby interface is located receives the protection switching message, and switching the communication services carried on the main interface to the standby interface.

4. The method according to claim 1, wherein
In a type C protection mode, in the case that a main interface and a standby interface of an optical network unit are protected complementarily and an first interface of the optical line terminal connected to the main interface of the optical network unit and an second interface of the optical line terminal connected to the standby interface of the optical network unit are located in the same line card,
the step of the line card of the optical line terminal detecting damage of the main interface or interrupt of the services carried on the main interface comprises: the line card detecting interrupt of communication between the first interface of the optical line terminal and the main interface of the optical network unit;
the step of performing the protection switching comprises: obtaining an activated interface as the standby interface and a non-activated interface as the main interface through the protection algorithm, sending a protection switching message to the optical network unit through the second interface connected to the activated interface, performing voluntarily the protection switching after the optical network unit receives the protection switching message and switching the communication services carried on the main interface to the standby interface.

5. The method according to claim 1, wherein
in a type C protection mode, in the case that a main interface and a standby interface of an optical network unit are protected complementarily, and a first interface of the optical line terminal connected to the main interface of the optical network unit and a second interface of the optical line terminal connected to the standby interface of the optical network unit are located in different line cards,
the step of the line card of the optical line terminal detecting damage of the main interface or interrupt of the services carried on the main interface comprises: the line card where the first interface is located detecting interrupt of communication between the first interface of the optical line terminal and the main interface of the optical network unit;
the step of performing the protection switching comprises: obtaining an activated interface as the standby interface and a non-activated interface as the main interface through a protection algorithm, sending a protection switching message required to be sent to the optical network unit to a line card where the second interface connected to the activated interface is located, sending the protection switching message to the optical network unit after the line card where the second interface is located receives the protection switching message, performing voluntarily the protection switching after the optical network unit receives the protection switching message and switching the communication services carried on the main interface to the standby interface.

6. A passive optical network system for implementing distributed protection comprising an optical line terminal comprising one or more line cards, wherein
the line card of optical line terminal is configured to perform protection switching when detecting damage of a main interface or interrupt of services carried on the main interface so as to switch communication services carried on the main interface to a standby interface.

7. The passive optical network system according to claim 6, wherein
in a type B protection mode, in the case that the main interface of the optical line terminal and the standby interface of the optical line terminal are protected complementarily and are located in the same line card,
the line card is configured to detect damage of the main interface or interrupt of the services carried on the main interface by detecting interrupt of trunk path communication between the main interface and an optical distribution network;
the line card is configured to perform the protection switching by obtaining an activated interface as the standby interface and a non-activated interface as the main interface through a protection algorithm, closing the non-activated interface, opening the activated interface, and switching the communication services carried on the main interface to the standby interface.

8. The passive optical network system according to claim 6, wherein
in a type B protection mode, in the case that the main interface of the optical line terminal and the standby interface of the optical line terminal are protected complementarily and are located in different line cards, the lines cards of the optical line terminal comprise a line card where the main interface is located and a line card where the standby interface is located, wherein
the line card where the main interface is located is configured to detect damage of the main interface or interrupt of the services carried on the main interface by detecting interrupt of the trunk path communication between the main interface and the optical distribution network;
the line card where the main interface is located is configured to perform the protection switching by obtaining an activated interface as the standby interface and a non-activated interface as the main interface through the protection algorithm, closing the non-activated interface, and sending a protection switching message to a line card where the activated interface is located;
the line card where the standby interface is located is configured to perform the protection switching by opening the standby interface after receiving the protection switching message, and switching the communication services carried on the main interface to the standby interface.

9. The passive optical network system according to claim 6, further comprising an optical network unit; wherein
in a type C protection mode, in the case that a main interface and a standby interface of the optical network unit are protected complementarily and an first interface of the optical line terminal connected to the main interface of the optical network unit and an second interface of the optical line terminal connected to the standby interface of the optical network unit are located in the same line card, the lines cards of the optical line terminal comprise a line card where the first interface is located and a line card where the second interface is located;
the line card where the first interface is located is configured to detect damage of the main interface or interrupt of the services carried on the main interface by detecting interrupt of communication between the first interface of the optical line terminal and the main interface of the optical network unit;
the line card where the first interface is located and the line card where the second interface is located are configured to perform the protection switching by obtaining an activated interface as the standby interface and a non-activated interface as the main interface through the protection algorithm, and sending a protection switching message to the optical network unit through the second interface connected to the activated interface;
the optical network unit is configured to perform voluntarily the protection switching after receiving the protection switching message and switch the communication services carried on the main interface to the standby interface.

10. The passive optical network system according to claim 6, further comprising an optical network unit; wherein
in a type C protection mode, in the case that a main interface and a standby interface of the optical network unit are protected complementarily, and an first interface of the optical line terminal connected to the main interface of the optical network unit and an second interface of the optical line terminal connected to the standby interface of the optical network unit are located in different line cards, the lines cards of the optical line terminal comprise a line card where the first interface is located and a line card where the second interface is located;
the line card where the first interface is located is configured to detect damage of the main interface or interrupt of the services carried on the main interface by detecting interrupt of communication between the first interface of the optical line terminal and the main interface of the optical network unit;
the line card where the first interface is located is configured to perform the protection switching by obtaining an activated interface as the standby interface and a non-activated interface as the main interface through the protection algorithm, and sending a protection switching message required to be sent to the optical network unit to a line card where the second interface connected to the activated interface is located;
the line card where the second interface is located is configured to perform the protection switching by sending the protection switching message received from the line card where the first interface is located to the optical network unit through the second interface;
the optical network unit is configured to perform voluntarily the protection switching after receiving the protection switching message and switch the communication services carried on the main interface to the standby interface.

11. An optical line terminal for implementing distributed protection comprising one or more line cards, wherein
the line card is configured to perform protection switching when detecting damage of a main interface or interrupt of services carried on the main interface so as to switch communication services carried on the main interface to a standby interface.

12. The optical line terminal according to claim 11, wherein
in a type B protection mode, in the case that the main interface of the optical line terminal and the standby interface of the optical line terminal are protected complementarily and are located in the same line card,
the line card is configured to detect damage of the main interface or interrupt of the services carried on the main interface by detecting interrupt of trunk path communication between the main interface and an optical distribution network;
the line card is configured to perform the protection switching by obtaining an activated interface as the standby interface and a non-activated interface as the main interface through a protection algorithm, closing the non-activated interface, opening the activated interface, and switching the communication services carried on the main interface to the standby interface.

13. The optical line terminal according to claim 11, wherein
in a type B protection mode, in the case that the main interface of the optical line terminal and the standby interface of the optical line terminal are protected complementarily and are located in different line cards, the lines cards of the optical line terminal comprise a line card where the main interface is located and a line card where the standby interface is located, wherein
the line card where the main interface is located is configured to detect damage of the main interface or interrupt of the services carried on the main interface by detecting interrupt of the trunk path communication between the main interface and the optical distribution network;
the line card where the main interface is located is configured to perform the protection switching by obtaining an activated interface as the standby interface and a non-activated interface as the main interface through the protection algorithm, closing the non-activated interface, and sending a protection switching message to a line card where the activated interface is located;
the line card where the standby interface is located is configured to perform the protection switching by opening the standby interface after receiving the protection switching message, and switching the communication services carried on the main interface to the standby interface.

14. The optical line terminal according to claim 11, wherein
in a type C protection mode, in the case that a main interface and a standby interface of an optical network unit are protected complementarily and an first interface of the optical line terminal connected to the main interface of the optical network unit and an second interface of the optical line terminal connected to the standby interface of the optical network unit are located in the same line card, the lines cards of the optical line terminal comprise a line card where the first interface is located and a line card where the second interface is located;
the line card where the first interface is located is configured to detect damage of the main interface or interrupt of the services carried on the main interface by detecting interrupt of communication between the first interface of the optical line terminal and the main interface of the optical network unit;
the line card where the first interface is located and the line card where the second interface is located are configured to perform the protection switching by obtaining an activated interface as the standby interface and a non-activated interface as the main interface through the protection algorithm, and sending a protection switching message to the optical network unit through the second interface connected to the activated interface;
thus, the optical network unit performs voluntarily the protection switching after receiving the protection switching message and switches the communication services carried on the main interface to the standby interface.

15. The optical line terminal according to claim 11, wherein
in a type C protection mode, in the case that a main interface and a standby interface of an optical network unit are protected complementarily, and an first interface of the optical line terminal connected to the main interface of the optical network unit and an second interface of the optical line terminal connected to the standby interface of the optical network unit are located in different line cards, the lines cards of the optical line terminal comprise a line card where the first interface is located and a line card where the second interface is located;
the line card where the first interface is located is configured to detect damage of the main interface or interrupt of the services carried on the main interface by detecting interrupt of communication between the first interface of the optical line terminal and the main interface of the optical network unit;
the line card where the first interface is located is configured to perform the protection switching by obtaining an activated interface as the standby interface and a non-activated interface as the main interface through the protection algorithm, and sending a protection switching message required to be sent to the optical network unit to the line card where the second interface connected to the activated interface is located;
the line card where the second interface is located is configured to perform the protection switching by sending the protection switching message received from the line card where the first interface is located to the optical network unit through the second interface;
thus, the optical network unit performs voluntarily the protection switching after receiving the protection switching message and switches the communication services carried on the main interface to the standby interface.
